# EUROPÄISCHE PATENTANMELDUNG

(11) **EP 4 799 484 A1**
(43) Veröffentlichungstag der Anmeldung: **02.09.2026**
(21) Anmeldenummer: 25160886.5
(22) Anmeldetag: 28.02.2025
(51) Int. Cl.: A22C 25/08

(54) **VORRICHTUNG UND VERFAHREN ZUM AUTOMATISCHEN ZUFÜHREN VON FISCHEN ZU EINER FISCHVERARBEITUNGSEINRICHTUNG**

(71) Anmelder: NORDISCHER MASCHINENBAU RUD. BAADER GMBH + CO KG, 23560 Lübeck (DE)
(72) Erfinder: Emde, Jonas, 23560 Lübeck (DE); Nordbjerg, Christian, 8240 Risskov (DK)
(74) Vertreter: Stork Bamberger Patentanwälte PartmbB

(57) **Zusammenfassung**

Die Erfindung betrifft eine Vorrichtung (10) zum automatischen Zuführen von Fischen (11), umfassend eine Zuführeinrichtung (14) mit einem Zentralförderband (15), eine Ausschleuseeinrichtung (18) mit mindestens einem einen Förderweg (19) bildenden Ausschleuseförderband (20) und mindestens einer Ausschleuseausnehmung (21), wobei die mindestens eine Ausschleuseausnehmung (21) zum selektiven Ausschleusen von Fischen (11) von dem mindestens einen Ausschleuseförderband (20) durch die Ausschleuseausnehmung (21) vorgesehen ist, eine der Ausschleuseeinrichtung (18) nachgeordnete Übernahmeeinheit (22) zur Übernahme der geförderten Fische (11), wobei die Ausschleuseeinrichtung (18) mindestens ein in den Förderweg (19) des mindestens einen Ausschleuseförderbands (20) ragendes Ausschleuseelement (24) umfasst, wobei das mindestens eine Ausschleuseelement (24) mindestens ein steuer- und/oder regelbares Positionierelement (25) umfasst, um das mindestens eine Ausschleuseelement (24) in seiner Lage derart veränderbar auszubilden, dass ein in seiner Breite veränderbarer Durchgangsspalt (26) des Förderwegs (19) zum Fördern von auf dem Ausschleuseförderband (20) angeordneten Fischen (11) mit einer maximalen Breite des Durchgangsspalts (26) erzeugbar ist. Des Weiteren betrifft die Erfindung ein entsprechendes Verfahren zum Zuführen von Fischen (11).

## Beschreibung

Die Erfindung betrifft eine Vorrichtung, ausgebildet und eingerichtet zum automatischen Zuführen von Fischen zu einer Fischverarbeitungseinrichtung, umfassend eine Zuführeinrichtung mit einem Zentralförderband, wobei die Zuführeinrichtung zum im Wesentlichen längsaxialen Fördern der Fische auf dem Zentralförderband in einer Förderrichtung im Wesentlichen mit dem Schwanz voraus oder mit dem Kopfabschnitt voraus ausgebildet und eingerichtet ist, eine Ausschleuseeinrichtung mit mindestens einem einen Förderweg bildenden Ausschleuseförderband, wobei das mindestens eine Ausschleuseförderband in Förderrichtung der Zuführeinrichtung nachgeordnet ausgebildet und zum Zuführen der Fische von dem Zentralförderband eingerichtet ist, und mindestens einer Ausschleuseausnehmung, wobei die mindestens eine Ausschleuseausnehmung zum selektiven Ausschleusen von Fischen von dem mindestens einen Ausschleuseförderband durch die Ausschleuseausnehmung vorgesehen ist, eine der Ausschleuseeinrichtung nachgeordnete Übernahmeeinheit, wobei die Übernahmeeinheit zur Übernahme der mittels der Ausschleuseeinrichtung geförderten Fische ausgebildet und eingerichtet ist

Die Erfindung betrifft weiterhin ein Verfahren zum automatischen Zuführen von Fischen zu einer Fischverarbeitungseinrichtung, umfassend die Schritte Bereitstellen von Fischen mittels einer Zuführeinrichtung mit einem Zentralförderband, wobei die Zuführeinrichtung zum im Wesentlichen längsaxialen Fördern der Fische auf dem Zentralförderband in einer Förderrichtung im Wesentlichen mit dem Schwanz voraus oder mit dem Kopfabschnitt voraus vorgesehen ist, Zuführen der Fische von der Zuführeinrichtung zu einer Ausschleuseeinrichtung mit mindestens einem einen Förderweg bildenden Ausschleuseförderband, wobei das mindestens eine Ausschleuseförderband in Förderrichtung der Zuführeinrichtung nachgeordnet ausgebildet und zur Übernahme der Fische von dem Zentralförderband eingerichtet ist, selektives Ausschleusen von Fischen von dem mindestens einen Ausschleuseförderband durch mindestens eine Ausschleuseausnehmung der Ausschleuseeinrichtung, Übernehmen oder Übergeben der von dem mindestens einen Ausschleuseförderband durch die Ausschleuseeinrichtung geförderten Fische mittels einer Übernahmeeinheit.

Derartige Vorrichtungen und Verfahren zum Zuführen von Fischen sind aus dem Stand der Technik grundsätzlich bekannt. Derartige Vorrichtungen zum Zuführen von Fischen sind regelmäßig Bestandteil zusammengesetzter Maschinen oder Anlagen, die weitere Förder- oder Bearbeitungseinheiten beinhalten. Bei den bekannten Vorrichtungen/Verfahren sind in der Regel umfangreiche und komplexe Förderkonzepte vorhanden, um die Fische von einem Punkt zum anderen zu transportieren. Derartige Förder- und Zuführungskonzepte sind jedoch in ihrer Funktionalität begrenzt, insbesondere wenn es um die Anpassung an variierende Fischgrößen geht. Darüber hinaus ist zu beachten, dass bei derartigen Zuführungen die Fische zu Beginn des Prozesses oftmals in einem ungeordneten und chaotischen Zustand vorliegen. Diese unkontrollierte Zuführung führt dazu, dass die Fische nicht nur in unterschiedlichen Größen, sondern auch in unregelmäßigen Anordnungen ankommen.

Im Zusammenhang mit dem bestimmungsgemäßen Betrieb derartiger Fischverarbeitungsanlagen sind vor der Zuführung zu den Bearbeitungsstationen regelmäßig Muldenförderer angeordnet. Diese Fördereinrichtungen weisen typischerweise eine Mehrzahl oder Vielzahl von schalen- oder wannenförmigen Mulden auf, die auf einem kontinuierlich umlaufenden Band angeordnet sind. Die Mulden sind so gestaltet, dass sie die Fische in einer Längsausrichtung aufnehmen und entsprechend in den Mulden transportieren, wodurch eine geordnete Anordnung während des Förderprozesses erreicht werden soll. Für eine möglichst effiziente Handhabung der Fische werden diese in den bekannten Fischverarbeitungsanlagen in möglichst hohen Geschwindigkeiten gefördert und verarbeitet, wodurch ein zuverlässiges und funktionierendes Ineinandergreifen der unterschiedlichen Prozessschritte und Anlagenbestandteile unerlässlich ist.

Aufgrund der hohen Fördergeschwindigkeit und der großen Fördermenge kommt es immer wieder zu unvorhergesehenen Störungen und Ausfällen bei der Förderung, insbesondere wenn die Fische in unterschiedlichen Größen, in ungeordneter Anordnung oder teilweise noch gefroren ankommen. In solchen Fällen kann es vorkommen, dass sich die Ausrichtung der Fische bei der Zuführung ändert oder mehrere Fische gleichzeitig in einer Mulde transportiert werden, was zu einer unzureichenden Aufteilung und damit zu einer ineffizienten oder erfolglosen nachgeschalteten Vereinzelung führt. Diese chaotische Anordnung kann nicht nur die Handhabung der Fische erschweren, sondern auch das Risiko von Verletzungen und Schäden bei der nachfolgenden Fischverarbeitung erhöhen.

Um eine effiziente Verarbeitung zu gewährleisten, müssen die Fische daher zunächst möglichst zuverlässig und vollständig vereinzelt und in eine kontrollierte Anordnung gebracht werden. Dieser zusätzliche Schritt ist regelmäßig durch manuelle Bearbeitungsschritte geprägt und erfordert daher einen erheblichen Zeit- und Ressourcenaufwand. Insbesondere bei unsachgemäßer oder ungenauer Handhabung kann zudem die Effizienz des gesamten Verarbeitungsprozesses beeinträchtigt sein. Grundsätzlich besteht aufgrund der Ausgangssituation der Bereitstellung der Fische die Notwendigkeit, die Fische zu vereinzeln, was in einem dynamischen Produktionsumfeld, in dem die Fischgrößen stark variieren können, besonders problematisch ist. Diese Variabilität kann auf saisonale Schwankungen, unterschiedliche Fangmethoden oder Änderungen in der Zuchtpraxis zurückzuführen sein. Bestehende Systeme sind daher oft nicht in der Lage, sich schnell und effizient an diese Veränderungen anzupassen, was die Produktivität und Qualität der Verarbeitung beeinträchtigen kann und einen hohen manuellen Aufwand erfordert. Sofern unterschiedliche Fischgrößen nacheinander oder innerhalb einer Charge zuverlässig und möglichst störungsfrei verarbeitet werden sollen, sind oftmals manuelle Anpassungen an den vorliegenden Komponenten erforderlich, um diese an die sich verändernden Bedingungen anzupassen. Die manuelle Justierung der Förderbänder bzw. der damit in Wirkverbindung stehenden Komponenten birgt bei fehlerhafter oder unsachgemäßer Einstellung Gefahrenpotentiale für das Bedienpersonal bei der Handhabung der Anlage und darüber hinaus auch für den Produktionsprozess der Fischverarbeitung.

Ein wesentlicher Nachteil existierender Förderbandanordnungen ist die Notwendigkeit manueller Anpassungen, wenn sich die durchschnittliche Fischgröße zwischen unterschiedlichen Chargen ändert. Diese manuelle Anpassung erfordert nicht nur zusätzlichen Arbeitsaufwand, sondern kann auch zu Verzögerungen im Produktionsprozess führen. Außerdem besteht das Risiko, dass die Anpassungen nicht optimal vorgenommen werden, was zu ineffizienten Förderungen und möglichen Beschädigungen der Fische führen kann.

Ein weiterer Nachteil der derzeitigen Technik für die Zuführung von Fischen zu Fischverarbeitungsanlagen ist der substantielle Mangel an Flexibilität und Wirtschaftlichkeit bei der Zuführung und der nachgeschalteten Vereinzelung der Fische. Obwohl verschiedene Vereinzelungsmethoden bekannt sind, treten dabei häufig Probleme auf, die sich negativ auf die nachfolgenden Verarbeitungsprozesse auswirken können. Diese Herausforderungen, zu denen sowohl die chaotische Anordnung der Fische als auch die Anpassung an unterschiedliche Fischgrößen gehören, beeinträchtigen die Effizienz der Fischverarbeitung und können darüber hinaus die Qualität der resultierenden Endprodukte durch unsachgemäße Verarbeitung beeinträchtigen.

Es ist daher Aufgabe der vorliegenden Erfindung, eine Vorrichtung zum automatischen Zuführen von Fischen bereitzustellen, die einerseits eine zuverlässige und sichere Vereinzelung der Fische bietet und andererseits komfortabel und flexibel einsetzbar ist. Weiterhin besteht die Aufgabe darin, ein entsprechendes Verfahren zum automatischen Zuführen von Fischen bereitzustellen.

Diese Aufgabe wird durch die eingangs genannte Vorrichtung dadurch gelöst, dass die Ausschleuseeinrichtung mindestens ein in den Förderweg des mindestens einen Ausschleuseförderbands ragendes Ausschleuseelement umfasst, wobei das mindestens eine Ausschleuseelement mindestens ein steuer- und/oder regelbares Positionierelement umfasst, um das mindestens eine Ausschleuseelement in seiner Lage relativ zum Förderweg des Ausschleuseförderbands derart veränderbar auszubilden und einzurichten, dass ein in seiner Breite veränderbarer Durchgangsspalt des Förderwegs zum Fördern von auf dem Ausschleuseförderband angeordneten Fischen mit einer maximalen Breite des Durchgangsspalts erzeugbar ist. Durch die erfindungsgemäße Vorrichtung wird eine präzisere Vereinzelung bzw. Ausschleusung der Fische im Zuge des Zuführungsprozesses gewährleistet, indem der Durchgangsspalt des Förderweges flexibel an unterschiedliche Fischgrößen anpassbar ist. In der Regel werden Fische in Chargen, sogenannten "Batches", zu derartigen Vorrichtungen gebracht, und je nach Art, Ursprung, Fütterung etc. der Fische treten erhebliche Schwankungen bei den Fischen einer Charge auf, insbesondere in Bezug auf Anatomie, Gewicht oder Größe. Daher ist eine Anpassungsfähigkeit des Durchgangsspaltes von Vorteil, da bestehende standardisierte Lösungen oft zu ineffizienten Ergebnissen führen oder manuelle Anpassungen erforderlich sind, um Fische mit unterschiedlichen Formen, Gewichten oder Abmessungen optimal zu fördern. Ein wesentlicher Vorteil dieser Vorrichtung ist die verbesserte Vereinzelung bzw. zielgerichtete Ausschleusung, die vorzugsweise an durchschnittliche Anatomie, Chargengröße und/oder Fischgröße anpassbar ist. Durch die Möglichkeit, den Durchgangsspalt variabel auszubilden, kann die Selektion der Fische für nachfolgende Prozesse oder Bearbeitungen nach definierten oder dynamischen Parametern angepasst und anschließend mittels der Ausschleuseeinrichtung selektiv gefördert werden. Falls zudem Fische bereits überlappend oder mehrere Fische gemeinsam oder zusammenhängend dem Förderweg der Ausschleuseeinrichtung zugeführt werden, ist mittels der erfindungsgemäßen Vorrichtung eine Möglichkeit zur selektiven Ausschleusung gegeben, sofern diese die Abmessungen des definierten Durchgangsspaltes überschreiten, wobei dieser entsprechend einstellbar und/oder anpassbar ist. Besonders relevant ist dies in Situationen, in denen die Fische aneinanderhaften, beispielsweise durch vorhergehende - auch unbeabsichtigte - Gefrierprozesse, was insbesondere im Rahmen der Kühlung mitunter vorkommt. Hierbei ist eine Vereinzelung der Fische erwünscht, wobei diese ggf. mittels der erfindungsgemäßen Vorrichtung selektiv ausschleusbar sind, wenn eine Vereinzelung durch vorgelagerte Prozesse nicht möglich ist. Ein weiterer Vorteil bei der erfindungsgemäßen Vorrichtung ist die Steigerung der Produktionskapazität. Durch die effiziente Vereinzelung bzw. Ausschleusung von Fischen und die variable Anpassung der Kriterien für den Durchgangsspalt lässt sich die Gesamtproduktionsleistung des Systems optimieren. Dies ist besonders wichtig in der Fischverarbeitung, wo Zeit und Effizienz entscheidend sind, um den Anforderungen des Marktes gerecht zu werden. Ein höherer Durchsatz und eine selektive Ausschleusung bedeutet, dass weniger Zeit für manuelles Sortieren oder Nachjustieren des Systems aufgewendet werden muss, was die Kosteneffizienz der Vorrichtungen und Fischverarbeitungsanlagen erhöht. Durch die erfindungsgemäße Vorrichtung wird der Aufwand für manuelle Eingriffe zur Sicherstellung der korrekten Vereinzelung, Positionierung und Ausschleusung der Fische erheblich reduziert. Durch die Automatisierung und präzise Steuerung der Ausschleuseeinrichtung reduziert sich der Bedarf an manuellen Eingriffen, was nicht nur die Effizienz steigert, sondern auch das Risiko von Fehlern und Verletzungen verringert. Die erfindungsgemäße Vorrichtung trägt somit zur Effizienzsteigerung und Kostensenkung bei und verbessert gleichzeitig die Qualität und Sicherheit im gesamten Produktionsprozess der Fischverarbeitung.

Bei den mittels der Vorrichtung geförderten Fischen handelt es sich im Sinne der Erfindung insbesondere um geköpfte, (teilweise) ausgenommene oder ganze Fische. Diese können in verschiedenen Zuständen vorliegen, wie beispielsweise als teilweise filetiertes Produkt, als ganze Fische mit oder ohne Schuppen etc. Entscheidend ist, dass diese Fische mittels der Vorrichtung förderbar sind, um eine erfindungsgemäße Förderung durch die Ausschleuseeinrichtung auszubilden.

Unter einem "Zentralförderband" im Sinne der Erfindung sind sämtliche Fördereinrichtungen zu verstehen, die insbesondere zum im Wesentlichen längsaxialen Fördern von Fischen in einer Förderrichtung ausgebildet sind, wobei die Fische entweder im Wesentlichen mit dem Schwanz oder mit dem Kopfabschnitt voraus, aber nicht notwendigerweise noch mit dem vollständigen Kopf, gefördert werden. Eine derartige Fördereinrichtung bzw. das Zentralförderband muss nicht zwingend ein klassisches Förderband sein, sondern es kommen grundsätzlich weitere Arten von Fördereinrichtungen in Betracht, die geeignet sind, die Fische gemäß der erfindungsgemäßen Vorrichtung zu fördern. Hierzu können beispielsweise auch Rutschen, Schalenförderer, Kettenförderer oder auch Vibrationsförderflächen gehören. In einer bevorzugten Ausführungsform umfasst die gesamte Vorrichtung nur ein Förderband, insbesondere das Zentralförderband, wobei die weiteren Fördereinrichtungen in das Zentralförderband integriert sind oder zumindest Segmente des Zentralförderbandes bilden. Auf diese Weise sind die einzelnen Fördervorgänge unmittelbar organisatorisch und strukturell miteinander verbunden. Weiter bevorzugt besteht das Zentralförderband aus mehreren Förderbändern oder Förderbandsegmenten, die insbesondere nebeneinander angeordnet sind.

Unter "Übernahmeeinheit" im Sinne der Erfindung ist insbesondere ein allgemeines Förderband zu verstehen, welches in einer bevorzugten Ausführungsform als weiteres Zentralförderband oder als Teil des Zentralförderbands ausgebildet und eingerichtet ist. Die Übernahmeeinheit ist so konzipiert, dass sie die mittels der Ausschleuseeinrichtung geförderten Fische übernimmt und weiterfördert. Die Übernahmeeinheit bildet nicht notwendigerweise eine aktive Übernahme oder Übergabe der Fische aus; vielmehr stellt die Übernahmeeinheit sicher, dass die durch die Ausschleuseeinrichtung geförderten Fische anschließend nahtlos weitergefördert werden. Eine passive Übernahme ermöglicht eine kontinuierliche und effiziente Verarbeitung, ohne dass zusätzliche manuelle Eingriffe oder komplexe Maschinenteile erforderlich sind.

Unter "Ausschleuseförderband" im Sinne der Erfindung sind sämtliche Fördereinrichtungen zu verstehen, die für die Förderung von Fischen ausgebildet und eingerichtet sind. Das Ausschleuseförderband ist in Förderrichtung der Zuführeinrichtung nachgeordnet und fördert darauf in Förderrichtung die von der Zuführeinrichtung kommenden Fische sowie die Fische während des Durchgangs durch die Ausschleuseeinrichtung bis zur Übernahme durch die Übernahmeeinheit bzw. bis zur Ausschleusung in die Ausschleuseausnehmung. In einer bevorzugten Weiterbildung der Erfindung ist das Ausschleuseförderband als Teil des Zentralförderbands ausgebildet und eingerichtet.

Das mindestens eine Ausschleuseelement ist vorzugsweise ein zumindest abschnittsweise flächiges Plattenelement, das in weiteren bevorzugten Ausführungsformen schwenkbar ausgebildet und eingerichtet ist. Das mindestens eine Ausschleuseelement ist grundsätzlich in beliebigen Ausgestaltungen und Verstellmöglichkeiten mittels des mindestens einen Positionierelements im Förderweg verstellbar vorgesehen, wobei mindestens eine entsprechende Veränderung des Durchgangsspalts ausgebildet und eingerichtet ist.

Unter einem "Positionierelement" im Sinne der Erfindung sind jegliche steuer- und/oder regelbaren Bauteile zu verstehen, die dazu ausgebildet und eingerichtet sind, die Position des Ausschleuseelements relativ zum Förderweg des Ausschleuseförderbandes zu verändern. Diese Elemente ermöglichen eine präzise Einstellung des Durchgangsspaltes, um z. B. die Fische entsprechend ihrer Größe optimal zu fördern und zu vereinzeln. Das Positionierelement kann je nach Ausgestaltung der entsprechenden Vorrichtung unterschiedliche Technologien umfassen, wie z. B. motorisierte Aktuatoren, insbesondere Servomotoren, pneumatische Systeme oder mechanische Vorrichtungen, die eine flexible und dynamische Anpassung der Position des Ausschleuseelements ermöglichen. Durch die Implementierung eines solchen Positionierelements ist insbesondere sichergestellt, dass sich die Vorrichtung an unterschiedliche Fischgrößen und -formen anzupassen geeignet ist. Das mindestens eine Ausschleuseelement ist vorzugsweise passiv ausgebildet und eingerichtet, d.h. Fische oder Teile von Fischen werden bei Kontakt mit dem jeweiligen Ausschleuseelement und bei Überschreiten der Abmessungen des Durchgangsspaltes in dem Förderweg durch Verdrängung ausgeschleust und durch die Ausschleuseausnehmung aus dem Förderweg herausbefördert. Das Positionierelement ist vorzugsweise zur rotatorischen Bewegung des mindestens einen Ausschleuseelements ausgebildet und eingerichtet, in einer alternativen oder ergänzenden Ausführungsform ist das Positionierelement zur linearen Verstellung des mindestens einen Ausschleuseelements ausgebildet und eingerichtet, insbesondere zur zumindest teilweise verschiebenden Bewegung des mindestens einen Ausschleuseelements.

In einer vorteilhaften Weiterbildung ist die mindestens eine Ausschleuseeinrichtung zum zumindest bereichsspezifischen Sortieren von Fischen vorgesehen, indem der Durchgangsspalt auf eine vorgegebene Größe einstellbar ist, um beispielsweise eine Teilung des Fischstroms in entsprechend größere oder kleinere Fischgrößen auszubilden und einzurichten. Weiterhin können mehrere entsprechende Vorrichtungen in Reihe oder hintereinander angeordnet sein, um eine entsprechende Sortierung verschiedener Fischströme auszubilden und einzurichten.

Eine bevorzugte Ausführungsform ist dadurch gekennzeichnet, dass das mindestens eine Ausschleuseelement zur automatischen und/oder selektiven Veränderung des Durchgangsspalts ausgebildet und eingerichtet ist, wobei das Positionierelement die Lageveränderung des mindestens einen Ausschleuseelements realisiert. Diese Ausgestaltung ermöglicht insbesondere eine präzise Anpassung des Durchgangsspalts an die jeweiligen Fischgrößen, die Anatomie oder das Gewicht, wodurch eine effiziente Vereinzelung bzw. Ausschleusung von Fischen, die nicht diese Kriterien erfüllen, gewährleistet wird. Die automatische Anpassung reduziert die Notwendigkeit manueller Eingriffe zur Veränderung des Durchgangsspalts, was den Prozess nicht nur beschleunigt, sondern auch die Konsistenz und Qualität der Verarbeitung erhöht. Durch die selektive Steuerung des Durchgangsspalts wird zudem das Risiko von Fehlausschleusungen oder fehlerhaften Größen, Anatomien oder Gewichten im Verarbeitungsprozess reduziert.

In einer weiteren vorteilhaften Ausgestaltung der Erfindung umfasst die Vorrichtung weiter mindestens eine Erfassungseinheit, wobei die mindestens eine Erfassungseinheit zur Erfassung und/oder Bestimmung von geförderten Fischen, insbesondere der Größe, der Breite und/oder des Gewichts, ausgebildet und eingerichtet ist. Ein wesentlicher Vorteil dieser Ausgestaltung besteht darin, dass auf diese Weise Durchschnittswerte der geförderten Fische, insbesondere hinsichtlich ihrer Größe, Anatomie und ihres Gewichts, gebildet werden können. Diese Durchschnittswerte/Mittelwerte ermöglichen es, den Durchgangsspalt des mindestens einen Ausschleuseelements mittels des Positionierelements entsprechend zu verändern, das heißt zu vergrößern oder zu verkleinern, um einen entsprechenden maximalen Wert für die Förderung der Fische einzustellen. Die zu erfassenden Parameter der Fische sind sind grundsätzlich flexibel und insbesondere abhängig von den zu fördernden Fischen, dem Zustand der Fische, der Fischart oder der vorliegenden mindestens einen Erfassungseinheit. Vorzugsweise ist die Breite der Fische erfassbar, insbesondere die breiteste Ausdehnung der Fische während der Förderung, was in der Regel eine Seitenlage ist. Die breiteste Ausdehnung liegt dabei in der Regel im Kopfbereich vor, so dass besonders bevorzugt die queraxiale des Kopfbereichs mittels der mindestens einen Erfassungseinheit erfasst und/oder bestimmt wird.

Als "Erfassungseinheit" kann grundsätzlich jede Erfassungseinheit vorgesehen sein, die eine Erfassung von Fischen oder Teilen davon ermöglicht, wozu z. B. Kameras, Sensoren, Röntgengeräte, fotoelektrische Einrichtungen etc. vorgesehen sein können, um Fische oder Teile davon zu erfassen. Vorzugsweise stellt die Erfassungseinheit somit eine mechanische, elektrische und/oder elektronische Einrichtung dar, die zur Erfassung der Fischanatomie und oder zur Bestimmung relevanter Parameter zur Veränderung der Breite des Durchgangsspalts ausgebildet und eingerichtet ist. Die Erfassungseinheit ist insbesondere zum Erfassen und/oder Bestimmen fischgrößenrelevanter Daten ausgebildet und erfasst die Fischanatomie vorzugsweise in Form eines oder mehrerer Datensätze, um diese weiter bevorzugt zu speichern und anschließend für weitere Verwendungen verfügbar zu machen. Die Daten der Fischanatomie können dabei nicht nur die Körpergröße der Fische mit der Länge, Höhe, Breite, Bauchhöhlenlage etc. umfassen, sondern insbesondere auch Verhältnisse, Formen, Farbgebung sowie Festigkeiten zwischen den zu bearbeitenden Fischen. In der einfachsten Form der Erfassung ist jedoch zumindest die queraxiale Ausdehnung der Fische. Die Daten der Fischanatomie werden vorzugsweise in einer Datenbank gespeichert. Die durch die Erfassungseinheit zu erfassenden Parameter der Fischanatomie sollen insbesondere Parameter zur bedarfsgerechten Ansteuerung des entsprechenden Ausschleuseelements bzw. des Positionierelements beinhalten, wobei explizit weitere Parameter umfasst sein können, die in weiteren Verarbeitungsschritten verwendet werden können. Das Ziel besteht darin, die Fischanatomie bestmöglich zu erfassen, um eine Einstellbarkeit des Durchgangsspalts in Abhängigkeit der erfassten bereits geförderten Fische vorzunehmen. Je nach zu erfassenden Fischparametern umfasst die jeweilige Erfassungseinheit geeignete Erfassungssysteme, wie beispielsweise Sensorsysteme, Drehwertgeber, optische Erfassungsmodule, Wägeeinrichtungen, Röntgeneinrichtung, Schallsensoren etc. Die Erfassungseinheit umfasst somit mechanische, elektronische, optische Komponenten oder Elementkombinationen daraus, die zum Erfassen und/ oder Bestimmen fischgrößenrelevanter Daten geeignet sind. Die Erfassungseinheit umfasst insbesondere solche Elemente, mittels denen die Höhe, die Länge, die Breite und/oder die Bauchhöhlenlage der Fische bestimmt werden können. Die Erfassungseinheit ist weiter bevorzugt ortsfest im Bereich der Übernahmeeinrichtung, insbesondere des Förderbands der übernommenen Fische angeordnet. Weiter bevorzugt sind mehrere Erfassungseinheiten an unterschiedlichen Positionen vorgesehen, um eine mehrteilige Erfassung der Fische auszubilden. In einer weiteren bevorzugten Ausführungsform umfasst die Erfassungseinheit weiter mindestens eine Rechnereinheit, um die Daten der erfassten Fische zu verarbeiten oder auszuwerten. In weiteren vorteilhaften Ausführungen ist die Rechnereinheit ein separates Bauteil, um entsprechende Rechenoperationen auszuführen.

Eine bevorzugte Ausführungsform der Erfindung zeichnet sich dadurch aus, dass die mindestens eine Erfassungseinheit in Förderrichtung vor der Ausschleuseeinrichtung und/oder hinter der Ausschleuseeinrichtung angeordnet ist, wobei die mindestens eine Erfassungseinheit insbesondere zur Erfassung und/oder Bestimmung der von der Ausschleuseeinrichtung an die Übernahmeeinheit geförderten Fische ausgebildet und eingerichtet ist. Durch die Anordnung der mindestens einen Erfassungseinheit in Förderrichtung vor und/oder hinter der Ausschleuseeinrichtung wird eine kontinuierliche Erfassung und/oder Bestimmung der geförderten Fische ermöglicht, was eine präzise Erfassung von Qualitätsmerkmalen wie Größe, Gewicht oder anatomische Ausprägungen gewährleistet. Die Möglichkeit, die Erfassungseinheit sowohl vor als auch hinter der Ausschleuseeinrichtung zu positionieren, bietet eine hohe Flexibilität in der Anlagengestaltung und ermöglicht eine Anpassung an unterschiedliche Produktionsanforderungen und -bedingungen. Weiter bevorzugt ist die mindestens eine Erfassungseinheit bereits in bestehenden Fischverarbeitungsanlagen enthalten oder zumindest vorgesehen und die entsprechenden Daten sind entweder schon bekannt oder werden sowieso erzeugt. In besonders bevorzugten Ausführungsform kann es darüber hinaus vorgesehen sein, dass die Vorrichtung mehrere Erfassungseinheiten umfasst.

Eine vorteilhafte Weiterbildung zeichnet sich dadurch aus, dass das mindestens eine Ausschleuseelement in Abhängigkeit von mittels der mindestens einen Erfassungseinheit erfassten Fischen, insbesondere in Abhängigkeit von einer vorgegebenen Anzahl von erfassten und/oder bestimmten Werten von geförderten Fischen, regel- und/oder steuerbar ausgebildet und eingerichtet ist. Auf diese Weise ist eine präzise Anpassung des mindestens einen Ausschleuseelements an die spezifischen Charakteristika der geförderten Fische gewährleistet. Bei der Zuführung von Fischen kann es vorkommen, dass diese übereinander oder nebeneinander liegen und unter Umständen auch miteinander verbunden, insbesondere gefroren sind, so dass eine Vereinzelung oder selektive Ausschleusung erforderlich ist. Die Integration der mindestens einen Erfassungseinheit bietet die Möglichkeit, relevante Parameter der geförderten Fische, wie beispielsweise Größe, Form und Anordnung, zu erfassen oder zu bestimmen. Die daraus resultierenden Daten sind insbesondere in Verbindung mit einer Steuer- und/oder Rechnereinheit bzw. einem Computersystem dazu verwertbar, den Durchgangsspalt des mindestens einen Ausschleuseelements derart anzupassen, dass eine bedarfsgerechte Vereinzelung bzw. Ausschleusung der Fische ausgebildet und eingerichtet ist. Dadurch wird nicht nur die Effizienz des Ausschleuseprozesses erhöht, sondern auch das Risiko einer Beschädigung der Fische oder einer Störung nachfolgender Betriebsprozesse minimiert.

Eine zweckmäßige Ausgestaltung der Erfindung ist dadurch gekennzeichnet, dass in Abhängigkeit von der vorgegebenen Anzahl der erfassten und/oder bestimmten Werte der geförderten Fische das mindestens eine Ausschleuseelement positionsveränderbar ausgebildet und eingerichtet ist, um in Abhängigkeit von einem festlegbaren und/oder berechenbaren Einstellwert der erfassten und/oder bestimmten Werte der Fische den Durchgangsspalt auf dem Förderweg der Ausschleuseeinrichtung zu vergrößern oder zu verkleinern, insbesondere automatisiert und/oder selbsttätig. Durch die positionsver-änderbare Ausgestaltung des mindestens einen Ausschleuseelements wird eine präzise Anpassung des Durchgangsspalts im Förderweg des Ausschleuseförderbands ermöglicht. Diese Flexibilität erlaubt es, den Durchgangsspalt in Abhängigkeit von erfassten Fischen entsprechend zu vergrößern oder zu verkleinern, um auf die variierenden Fische innerhalb eines Förderumfangs, das heißt einer Charge, zu reagieren, wodurch beispielsweise zusammengefrorene oder eng beieinander liegende Exemplare, die über die Abmessungen des einzustellenden Durchgangsspalt hinausgehen, zielgerichtet und selektiv vom Förderweg auszuschleusen. Die bevorzugte automatische oder automatisierte Steuerung/Regelung des mindestens einen Ausschleuseelements bietet eine integrierte Lösung für die gesamte Anlage der Fischverarbeitung. Darüber hinaus reduziert die Möglichkeit der automatischen oder automatisierten Anpassung den manuellen Aufwand, was zu einer signifikanten Steigerung der Produktivität führt. Die Vorrichtung trägt somit zur einer Effizienzsteigerung im Verarbeitungsprozess bei, indem sie eine präzise und bedarfsgerechte Vereinzelung bzw. zielgerichtete Ausschleusung von Fischen gewährleistet.

Gemäß einer weiteren bevorzugten Ausführungsform ist die Erfindung dadurch gekennzeichnet, dass der Durchgangsspalt geringer als die doppelte Breite der Fische ausgebildet und eingerichtet ist, insbesondere in Abhängigkeit von den erfassten und/oder bestimmten Werten der vorgegebenen Anzahl der Fische. Diese spezifische Dimensionierung ermöglicht eine selektive Vereinzelung der Fische, auch wenn sie in unterschiedlichen Formationen gefördert werden. Durch die Anpassung des Durchgangsspaltes in Abhängigkeit von den erfassten und/oder bestimmten Werten der vorgegebenen Anzahl von Fischen ist erreichbar, dass beispielsweise nur Fische mit einer vorgegebenen Größe, z. B. kleiner als die doppelte Breite des Durchgangsspaltes bzw. einzeln geförderte Fische, durch die Ausschleuseeinrichtung hindurch gefördert werden können. Dadurch wird insbesondere sichergestellt, dass bei nebeneinander geförderten Fischen einer der beiden Fische ausgeschleust wird, wodurch die erfindungsgemäße vorgesehene Vereinzelung unterstützt wird.

Eine weitere zweckmäßige Ausgestaltung der Erfindung ist dadurch gekennzeichnet, dass das mindestens eine Ausschleuseelement mittels des Positionierelements um eine im Wesentlichen in der Vertikalen verlaufenden Schwenkachse verschwenkbar ausgebildet und eingerichtet ist, derart, dass das mindestens eine Ausschleuseelement in den Förderweg hineinbewegbar oder aus dem Förderweg herausbewegbar ist. Diese flexible Anordnung des mindestens einen Ausschleuseelements mittels des Positionierelements ermöglicht es, das mindestens eine Ausschleuseelement gezielt und komfortabel in den Förderweg hinein oder aus dem Förderweg heraus zu bewegen. Dadurch lässt sich die Vorrichtung optimal an unterschiedliche Fischkonfigurationen anpassen, indem die Position des mindestens einen Ausschleuseelements bedarfsgerecht verändert wird, um eine effektive Ausschleusung bzw. Vereinzelung der Fische zu gewährleisten und die Ausschleusung bzw. Vereinzelung auf die tatsächlich vorhandenen Fischgrößen auszurichten.

Eine bevorzugte Weiterbildung der Erfindung zeichnet sich dadurch aus, dass das mindestens eine Ausschleuseelement ein in den Förderweg ragendes freies Ende ausbildet und einrichtet, wobei das freie Ende und eine sich entlang der Förderrichtung erstreckende Längsseite der mindestens einen Ausschleuseausnehmung den Durchgangsspalt definieren. Dieses freie Ende definiert zusammen mit einer in Förderrichtung verlaufenden Längsseite der mindestens einen Ausschleuseausnehmung den Durchgangsspalt. Diese spezifische Konfiguration ermöglicht eine genaue Regulierung der Größe des Durchgangsspalts, wodurch sichergestellt wird, dass nur Fische, die den vorgegebenen Abmessungen entsprechen, durch die Ausschleuseeinrichtung gelangen. Dies unterstützt die effektive Vereinzelung der Fische und trägt zur Optimierung des Ausschleusens bei, indem eine klare Abgrenzung zwischen den geförderten und auszuschleusenden Fischen ausgebildet und eingerichtet ist.

Eine zweckmäßige Ausgestaltung der Erfindung ist dadurch gekennzeichnet, dass die Ausschleuseeinrichtung zwei im Wesentlichen parallel verlaufende, jeweils einen Förderweg bildende Ausschleuseförderbänder mit jeweils einem in den Förderweg des jeweiligen Ausschleuseförderbandes ragenden Ausschleuseelement umfasst, wobei zwischen den beiden Ausschleuseförderbändern zumindest bereichsweise die mindestens eine Ausschleuseausnehmung zum Ausschleusen der Fische ausgebildet und eingerichtet ist. Die Anordnung von zwei im Wesentlichen parallel verlaufenden Ausschleuseförderbändern mit jeweils einem in den Förderweg ragenden Ausschleuseelement bietet den Vorteil einer effizienten und gezielten Vereinzelung der Fische, wobei diese Konfiguration jeweils die Ausschleusung unerwünschter Fische, die größer als der eingestellte Durchgangsspalt sind, bewirkt. Durch die im Wesentlichen parallele Anordnung lassen sich mehrere Fischströme gleichzeitig handhaben, wodurch der Ausschleuseprozess optimiert wird. Die Positionierung der mindestens einen Ausschleuseausnehmung zwischen den beiden Förderbändern ermöglicht eine effiziente und platzsparende Anordnung, wodurch wiederum die Fische effektiv und kontrolliert aus dem Förderprozess ausgeschleust werden. Vorzugsweise werden bei mehr als einem Ausschleuseförderband sämtliche Durchgangsspalte auf die gleiche Abmessung eingestellt. In besonderen Anwendungsfällen oder bei besonderen Konfigurationen kann es zweckmäßig sein, unterschiedliche Durchgangsspalte vorzusehen, insbesondere dann, wenn unterschiedliche Fischgrößen auf den Förderbändern zu fördern sind.

In weiteren bevorzugten Ausführungsformen kann die Vorrichtung für größere Durchsätze entsprechend skaliert werden, indem mehrere im Wesentlichen parallel verlaufende Ausschleuseförderbänder und zusätzliche zwischen jeweils zwei Ausschleuseförderbändern angeordnete Ausschleuseausnehmungen vorgesehen sind. Dies ermöglicht eine noch effizientere Bearbeitung und Vereinzelung bzw. Ausschleusung der Fische bei gleichzeitig weiter erhöhtem Durchsatz.

Eine vorteilhafte Weiterbildung zeichnet sich dadurch aus, dass in Förderrichtung gesehen vor der mindestens einen Ausschleuseausnehmung am Eingang der Ausschleuseeinrichtung zwischen den beiden Ausschleuseförderbändern mindestens ein Keilelement zum Separieren der geförderten Fische zwischen den beiden Ausschleuseförderbändern angeordnet ist und/oder dass in dem in Förderrichtung gesehenen Endabschnitt der Ausschleuseausnehmung ein insbesondere zumindest bereichsweise in die Ausschleuseausnehmung hineinragendes Aufnahmeelement angeordnet ist, wobei das Aufnahmeelement zum abschnittsweisen Aufnehmen von teilweise in der Ausschleuseausnehmung hängenden Fischen ausgebildet und eingerichtet ist. Durch die Anordnung eines Keilelementes in Förderrichtung gesehen vor der mindestens einen Ausschleuseausnehmung wird sichergestellt, dass die Fische vor dem Eintritt in die Ausschleuseeinrichtung, insbesondere zu den Ausschleuseförderbändern, gezielt separiert werden. Diese Maßnahme verhindert, dass Fische versehentlich in die Ausschleuseausnehmung ausgeschleust werden, und unterstützt eine gezielte Trennung in zwei entsprechende Ströme für die jeweiligen Ausschleuseförderbänder. Das am Endabschnitt der Ausschleuseausnehmung angeordnete Aufnahmeelement bietet ferner den Vorteil, dass ein zumindest bereichsweise in die Ausschleuseausnehmung hineinragendes die Förderung unterstützendes Bauteil vorgesehen ist. Dieses Aufnahmeelement ist dafür ausgelegt, teilweise in der Ausschleuseausnehmung hängende Fische abschnittsweise aufzunehmen, wodurch insbesondere verhindert wird, dass durch den Durchgangsspalt geförderte Fische in die Ausschleuseausnehmung ausgeschleust werden, obwohl sie grundsätzlich die erforderlichen Abmessungen aufweisen. Ein teilweises Hineinragen in die Ausschleuseausnehmung kann z. B. durch Kontakt der Fische mit dem Aufnahmeelement beim Durchführen durch den Durchgangsspalt erfolgt sein, wenn die Fische z. B. nicht vollständig längsaxial auf dem Förderband ausgerichtet sind. Diese Kombination von Keilelement und Aufnahmeelement gewährleistet eine kontrollierte Zuführung der Fische und ermöglicht eine zuverlässige Vereinzelung und Ausschleusung unerwünschter Fische, die größer als der eingestellte Durchgangsspalt sind.

Des Weiteren wird die Aufgabe durch das eingangs genannte Verfahren dadurch gelöst, dass Fische mittels der mindestens einen Ausschleuseeinrichtung selektiv ausgeschleust werden, wobei die Ausschleuseeinrichtung mindestens ein in den Förderweg des mindestens einen Ausschleuseförderbandes ragendes Ausschleuseelement umfasst, wobei das mindestens eine Ausschleuseelement mittels eines steuer- und/oder regelbaren Positionierelementes in seiner Lage relativ zum Förderweg des Ausschleuseförderbandes derart verändert wird, dass ein in seiner Breite veränderbarer Durchgangsspalt in dem Förderweg ausgebildet wird, wobei die Förderung der auf dem Ausschleuseförderband geförderten Fische durch eine maximale Breite des Durchgangsspaltes begrenzt wird. Die flexible Anpassung des Durchgangsspaltes an unterschiedliche Größen der Fische ermöglicht eine genauere Vereinzelung bzw. Ausschleusung der Fische, was besonders wichtig ist, da die Fische in Chargen mit sehr unterschiedlicher Anatomie, Gewicht und Größe zugeführt werden. Die Fische in den jeweiligen Chargen bewegen sich im Rahmen der Normalverteilung. Durch die Anpassungsfähigkeit des Verfahrens wird die Notwendigkeit manueller Eingriffe verringert, die oft erforderlich sind, um Fische unterschiedlicher Form und Größe zu fördern. Insbesondere in Situationen, in denen Fische aneinanderhaften, z. B. durch unbeabsichtigtes Gefrieren, gewährleistet das Verfahren eine gezielte Ausschleusung, wenn die Fische die Abmessungen des Durchgangsspalts überschreiten. Darüber hinaus erhöht die Möglichkeit, den Durchgangsspalt variabel zu gestalten, die Produktionskapazität, da mehr Fische effizient vereinzelt werden können und die Gesamtförderleistung maximiert wird. Dies führt zu einer höheren Durchsatzrate und verringert den Zeitaufwand für das manuelle Aussortieren und Nachjustieren des Systems, was die Kosteneffizienz erhöht. Insgesamt trägt das Verfahren zur Automatisierung und exakten Steuerung der Ausschleuseeinrichtung und nachgeschalteter Bearbeitungsstationen bei, was nicht nur die Effizienz steigert, sondern auch das Risiko von Fehlern und Beschädigungen reduziert und somit die Qualität und Sicherheit im gesamten Produktionsprozess der Fischverarbeitung verbessert.

Zur Vermeidung von Wiederholungen wird im Zusammenhang mit dem erfindungsgemäßen Verfahren auf die bereits im Zusammenhang mit der erfindungsgemäßen Vorrichtung im Detail geschilderten Vorzüge verwiesen. Diese gelten in analoger Weise auch für das angegebene erfindungsgemäße Verfahren.

Gemäß einer weiteren bevorzugten Ausführungsform wird das mindestens eine Ausschleuseelement mittels des Positionierelements automatisch und/oder selektiv in seiner Lage verändert.

Eine weitere vorteilhafte Ausgestaltung ist gekennzeichnet durch Erfassen und/oder Bestimmen von geförderten Fischen, insbesondere der Größe, der Breite und/oder des Gewichts, mittels mindestens einer Erfassungseinheit.

Eine bevorzugte Weiterbildung zeichnet sich dadurch aus, dass die Fische mittels der mindestens einen Erfassungseinheit in Förderrichtung vor und/oder hinter der Ausschleuseeinrichtung erfasst und/oder bestimmt werden, insbesondere dass die von der Ausschleuseeinrichtung an die Übernahmeeinheit geförderten Fische mittels der mindestens einen der Ausschleuseeinrichtung nachgeordneten Erfassungseinheit erfasst und/oder bestimmt werden.

Eine weitere zweckmäßige Ausgestaltung der Erfindung ist dadurch gekennzeichnet, dass das mindestens eine Ausschleuseelement in Abhängigkeit von mittels der mindestens einen Erfassungseinheit erfassten Fischen, insbesondere in Abhängigkeit von einer vorgegebenen Anzahl von erfassten und/oder bestimmten Werten von geförderten Fischen, geregelt und/oder gesteuert wird.

Eine vorteilhafte Weiterbildung der Erfindung zeichnet sich dadurch aus, dass in Abhängigkeit von der vorgegebenen Anzahl der erfassten und/oder bestimmten Werte der geförderten Fische das mindestens eine Ausschleuseelement positionsveränderbar ist, um in Abhängigkeit von einem festlegbaren und/oder berechenbaren Einstellwert der erfassten und/ oder bestimmten Werte der Fische den Durchgangsspalt auf dem Förderweg der Ausschleuseeinrichtung zu vergrößern oder zu verkleinern, insbesondere automatisiert und/oder selbsttätig.

Eine weitere zweckmäßige Ausgestaltung der Erfindung ist dadurch gekennzeichnet, dass der Durchgangsspalt in Abhängigkeit insbesondere von den erfassten und/oder bestimmten Werten der vorgegebenen Anzahl der Fische geringer als die doppelte Breite der Fische eingestellt wird.

Eine vorteilhafte Weiterbildung zeichnet sich dadurch aus, dass das mindestens eine Ausschleuseelement mittels des Positionierelements um eine im Wesentlichen vertikal verlaufende Schwenkachse derart verschwenkt wird, dass das mindestens eine Ausschleuseelement zur Veränderung des Durchgangsspalts in den Förderweg hinein oder aus dem Förderweg heraus bewegt wird.

Weitere zweckmäßige und/oder vorteilhafte Merkmale und Weiterbildungen sowie bevorzugte Vorrichtungsgegenstände ergeben sich aus den Unteransprüchen und der Beschreibung. Besonders bevorzugte Ausführungsformen der Vorrichtung zum automatischen Zuführen von Fischen werden anhand der beigefügten Zeichnungen näher erläutert. In den Zeichnungen zeigen:
- Fig. 1: eine schematische Darstellung einer Ausführungsform der erfindungsgemäßen Vorrichtung als Ausschnitt einer Fischverarbeitungsanlage in Draufsicht,
- Fig. 2: eine schematische Darstellung eines Teilbereichs einer weiteren Ausführungsform der erfindungsgemäßen Vorrichtung in perspektivischer Ansicht,
- Fig. 3: eine schematische Darstellung eines Teilbereichs einer weiteren Ausführungsform der erfindungsgemäßen Vorrichtung in Draufsicht,
- Fig. 4: eine schematische Darstellung einer Ausführungsform der erfindungsgemäßen Vorrichtung als Ausschnitt einer Fischverarbeitungsanlage in perspektivischer Ansicht
und
- Fig. 5: eine weitere schematische Darstellung einer Ausführungsform der erfindungsgemäßen Vorrichtung als Ausschnitt einer Fischverarbeitungsanlage in perspektivischer Ansicht.

Anhand der vorgenannten Figuren wird die erfindungsgemäße Vorrichtung sowie das erfindungsgemäße Verfahren im Folgenden näher erläutert.

Die in den Zeichnungen dargestellte Vorrichtung 10 ist zum automatischen Zuführen von Fischen 11 zu einer - in den Figuren nicht näher dargestellten - Fischverarbeitungseinrichtung. Derartige Fischverarbeitungseinrichtungen umfassen in der Regel verschiedene Stationen zur Verarbeitung der Fische, insbesondere zum Ausnehmen, Enthäuten, Filetieren, Chargieren etc., so dass diese Stationen in der Regel weitere Einrichtungen und Komponenten aufweisen, wie z. B. Schneideeinrichtungen mit Messerelementen, Wägeeinrichtungen mit Wägeelementen, Führungseinrichtungen sowie Steuer- und Regelsysteme, insbesondere Computersysteme. Bei den in den Figuren vereinfacht dargestellten Fischen 11 handelt es sich in den vorliegenden Ausführungsbeispielen um ganze Fische 11 mit einem Kopf- und einem Schwanzbereich. Die zur Zuführung bestimmte Fisch 11 können ebenfalls beispielsweise in Form eines geköpften, geschlachteten oder in der Bauchhöhle geöffneten Fischkörpers 11 vorliegen. Darüber hinaus ist die konkrete Spezies nicht erfindungsrelevant und es ist realisierbar, unterschiedliche Arten von Fischen 11 mit der erfindungsgemäßen Vorrichtung 10 zuzuführen und zu fördern, wobei gegebenenfalls Anpassungen bei Abmessungen, Abständen, Geschwindigkeiten etc. an die jeweils vorliegenden Fischarten vorzunehmen sind.

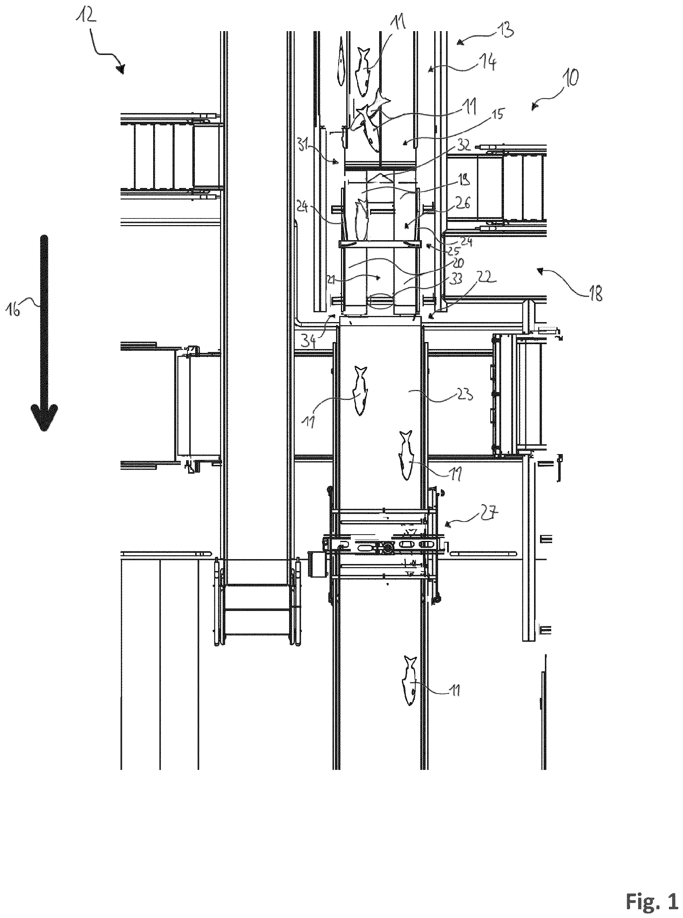

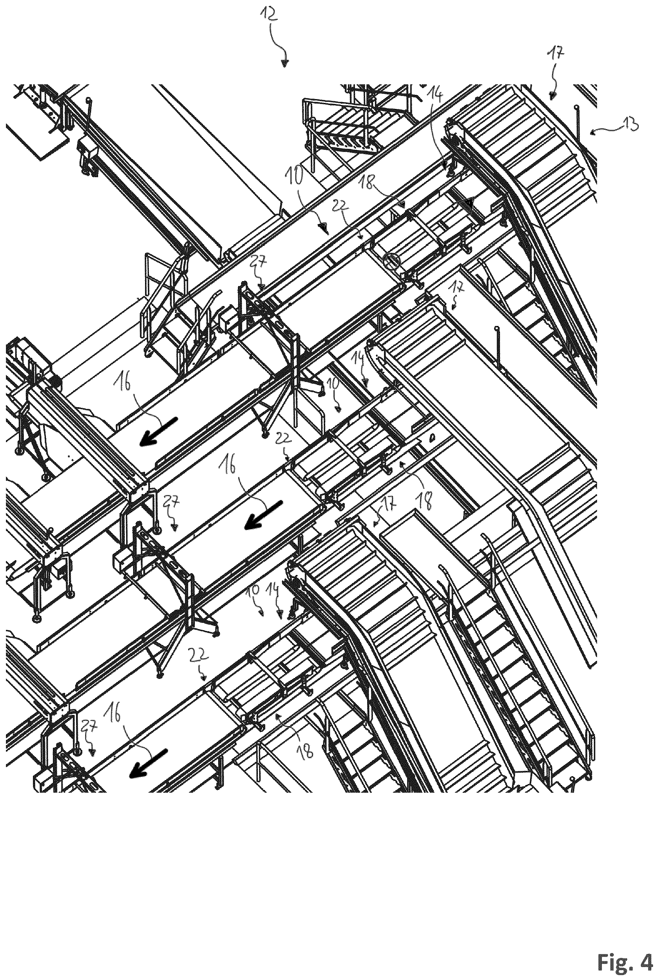

Fig. 1, Fig. 4 und Fig. 5 zeigen jeweils schematisch eine Ausführungsform der erfindungsgemäßen Vorrichtung 10 zum automatischen Zuführen von Fischen 11. Die Vorrichtungen 10 sind dabei Bestandteil einer Fischverarbeitungsanlage 12, wobei der dargestellte Bereich der Fischverarbeitungsanlage 12 insbesondere zum Fördern von Fischen 11 ausgebildet und eingerichtet ist und mindestens eine Fördereinrichtung 13 zum Fördern der Fische innerhalb der Fischverarbeitungsanlage 12 umfasst. Die erfindungsgemäße Vorrichtung 10 umfasst eine Zuführeinrichtung 14 mit einem Zentralförderband 15, wobei die Zuführeinrichtung 14 zum im Wesentlichen längsaxialen Fördern der Fische 11 auf dem Zentralförderband 15 in einer Förderrichtung 16 im Wesentlichen mit dem Schwanz voraus oder mit dem Kopfabschnitt voraus ausgebildet und eingerichtet ist. Die Zuführeinrichtung 14 kann in Abhängigkeit von der vorgesehenen Fischverarbeitungsanlage 12 entsprechend ausgestaltet sein und vorzugsweise weitere Zuführungselemente umfassen. Die in den Fig. 1, Fig. 4 und Fig. 5 gezeigte Fischverarbeitungsanlage 12 umfasst vorliegend einen Muldenförderer 17, der die Fische 11 im Wesentlichen in längsaxialer Ausrichtung an das Zentralförderband 15 übergibt oder übernimmt. Bei der Übergabe oder Übernahme der Fische 11 kann es vorkommen, dass diese dicht beieinander liegen, sich beispielsweise überlappen, wie in Fig. 1 gezeigt, oder dass ihre Ausrichtung nicht im Wesentlichen einer längsaxialen Ausrichtung entspricht. Mit der erfindungsgemäßen Vorrichtung 10 sind insbesondere derartige Fische 11 ausschleusbar oder in eine im Wesentlichen längsaxiale Ausrichtung ausrichtbar. Hierzu umfasst die Vorrichtung 11 weiter eine Ausschleuseeinrichtung 18 mit mindestens einem einen Förderweg 19 bildenden Ausschleuseförderband 20, wobei das mindestens eine Ausschleuseförderband 20 in Förderrichtung 16 der Zuführeinrichtung 14 nachgeordnet ausgebildet und zum Zuführen der Fische 11 von dem Zentralförderband 15 eingerichtet ist.

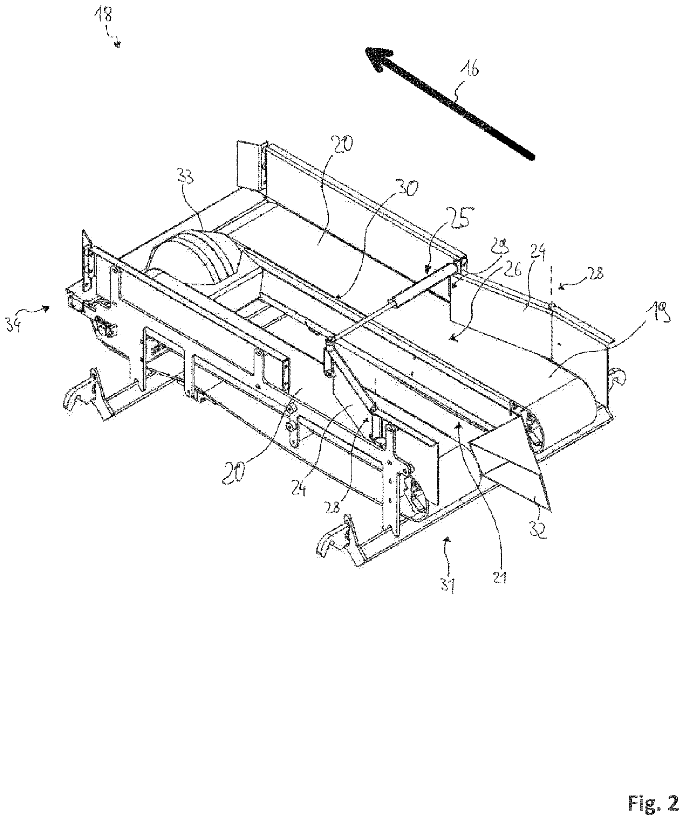

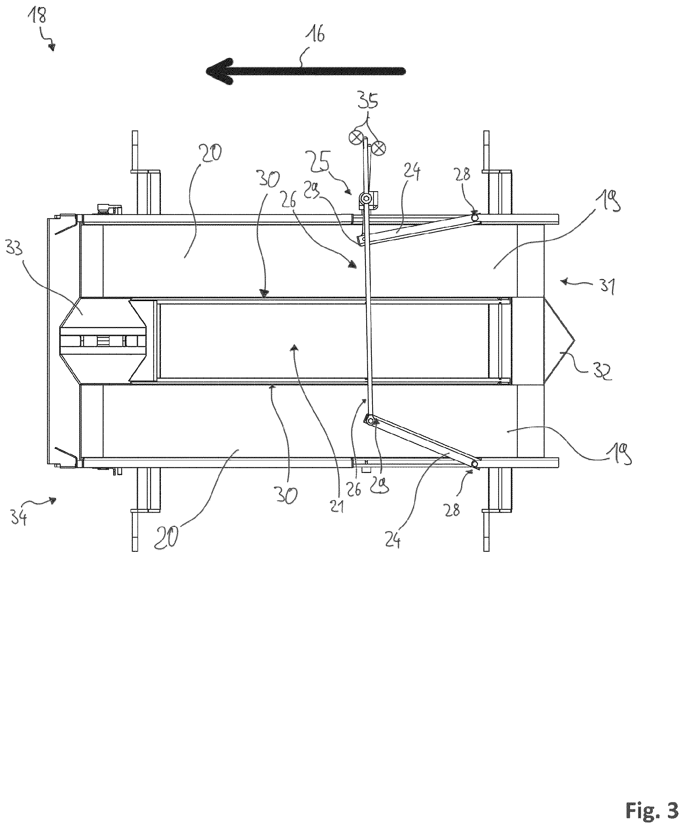

Die Ausschleuseeinrichtung 18 umfasst mindestens eine Ausschleuseausnehmung 21, wobei die mindestens eine Ausschleuseausnehmung 21 zum selektiven Ausschleusen von Fischen 11 von dem mindestens einen Ausschleuseförderband 20 durch die Ausschleuseausnehmung 21 vorgesehen ist. In den Fig. 2 und Fig. 3 ist jeweils eine Ausschleuseeinrichtung 18 bzw. ein Teil der Vorrichtung 10 dargestellt, wobei diese jeweils zwei Ausschleuseförderbänder 20 und einem zwischen den zwei Ausschleuseförderbänder 20 angeordnete Ausschleuseausnehmung 21 aufweisen. Die erfindungsgemäße Vorrichtung 10 umfasst weiter eine der Ausschleuseeinrichtung 18 nachgeordnete Übernahmeeinheit 22, wobei die Übernahmeeinheit 22 zur Übernahme der mittels der Ausschleuseeinrichtung 18 geförderten Fische 11 ausgebildet und eingerichtet ist. Die Übernahmeeinheit 22 der in Fig. 1, Fig. 4 und Fig. 5 dargestellten Vorrichtung 10 ist beispielhaft als weiteres Zentralförderband 23 ausgebildet und eingerichtet, wobei die Fische 11 anschließend zentral weiterförderbar sind. Sämtliche Förderbänder der erfindungsgemäßen Vorrichtung 10 können in bevorzugten Ausführungsformen auch im Wesentlichen zusammenhängend, miteinander verbunden oder zusammenwirkend ausgebildet sein. In weiteren bevorzugten Ausführungsformen kann die Übernahmeeinheit 22 weitere Komponenten umfassen, um eine entsprechende Übergabe bzw. Übergabe von der Ausschleuseeinrichtung 18 zu bewirken, wobei die Übernahmeeinheit 22 zumindest derart ausgebildet ist, um zumindest eine Übernahme bzw. Übergabe von der Ausschleuseeinrichtung 18 an eine weitere nachgeordnete Fördereinrichtung auszubilden und einzurichten.

Diese Vorrichtung 10 zeichnet sich erfindungsgemäß dadurch aus, dass die Ausschleuseeinrichtung 18 mindestens ein in den Förderweg 19 des mindestens einen Ausschleuseförderbands 20 ragendes Ausschleuseelement 24 umfasst, wobei das mindestens eine Ausschleuseelement 24 mindestens ein steuer- und/oder regelbares Positionierelement 25 umfasst, um das mindestens eine Ausschleuseelement 24 in seiner Lage relativ zum Förderweg 19 des Ausschleuseförderbands 20 derart veränderbar auszubilden und einzurichten, dass ein in seiner Breite veränderbarer Durchgangsspalt 26 des Förderwegs 19 zum Fördern von auf dem Ausschleuseförderband 20 angeordneten Fischen 11 mit einer maximalen Breite des Durchgangsspalts 26 erzeugbar ist. In den Figuren sind jeweils zwei Ausschleuseelemente 24 bei jedem der Ausschleuseförderbänder 20 vorgesehen, um jeweils eine entsprechende Einstellbarkeit des Durchgangsspaltes 26 auszubilden und einzurichten. Die Ausschleuseelemente 24 können dabei mittels eines einzigen Positionierelements 25 veränderbar sein, wie dies beispielhaft in Fig. 2 gezeigt ist, oder zwei separate Positionierelemente 25 umfassen, wie dies in Fig. 3 veranschaulicht ist. Vorzugsweise ist das mindestens eine Ausschleuseelement 24 zur automatischen und/oder selektiven Veränderung des Durchgangsspalts 26 ausgebildet und eingerichtet, wobei das mindestens eine Positionierelement 25 die Lageveränderung des mindestens einen Ausschleuseelements 24 realisiert. Das Positionierelement 25 umfasst vorzugsweise mindestens ein Antriebselement 35, wie z. B. motorisierte Aktuatoren, insbesondere Servomotoren, pneumatische Systeme oder mechanische Vorrichtungen, das eine flexible und dynamische Anpassung der Position des Ausschleuseelements ermöglicht. In der Fig. 3 ist schematisch für jedes der Positionierelemente 25 ein Antriebselement 35 dargestellt, das jeweils zur Veränderung des Positionierelements 25 und dadurch auch des jeweiligen Ausschleuseelements 24 ausgebildet und eingerichtet ist. In weiteren bevorzugten Ausführungsformen kann auch jeweils nur ein Antriebselement 35 vorgesehen sein, um in Wirkverbindung mit einem eines oder mehreren der Positionierelemente 25 zu treten und eine Veränderung von einem oder mehreren der Ausschleuseelemente 24 auszubilden und einzurichten.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder den Figuren zusammengefasst oder in einer gemeinsamen Ausführungsform beschrieben sind, auch funktional eigenständig die weiter oben beschriebene Vorrichtung 10 weiterbilden können.

Vorzugsweise umfasst die Vorrichtung 10 weiter mindestens eine der Ausschleuseeinrichtung 18 nachgeordnete Erfassungseinheit 27, wobei die mindestens eine Erfassungseinheit 27 zur Erfassung und/oder Bestimmung der von der Ausschleuseeinrichtung 18 an die Übernahmeeinheit 22 geförderten Fische 11, insbesondere der Breite und/oder des Gewichts, ausgebildet und eingerichtet ist. In den Fig. 1 bis Fig. 5 ist die mindestens eine Erfassungseinheit 27 an ein der Ausschleuseeinrichtung 18 nachgeordnetes Förderband, insbesondere das weitere Zentralförderband 23, angeordnet. In den dargestellten Ausführungsformen ist die Erfassungseinheit 27 über dem Förderband angeordnet, um die darunter geförderten Fische 11 zu erfassen. Die in den Fig. 1 bis Fig. 5 schematisch dargestellte Erfassungseinheit 27 ist besonders bevorzugt zur berührungslosen Erfassung der Fischanatomie der zu verarbeitenden Fische 11 vorgesehen, insbesondere mittels mindestens einem bildgebenden Verfahren. Der Erfassungsbereich umfasst dabei bevorzugt zumindest das Förderband, um die in Förderrichtung 16 geförderten Fische 11 entsprechend zu erfassen. Es sind jedoch alternativ oder ergänzend weitere unterschiedliche Erfassungseinheiten 27 zur Erfassung der Fische 11 denkbar, die beispielsweise eine mechanische Erfassung ausbilden und einrichten. In einer bevorzugten Weiterbildung der Erfindung ist das mindestens eine Ausschleuseelement 24 in Abhängigkeit von mittels der mindestens einen Erfassungseinheit 27 erfassten Fischen 11, insbesondere in Abhängigkeit von einer vorgegebenen Anzahl von erfassten und/oder bestimmten Werten von geförderten Fischen 11, regel- und/oder steuerbar ausgebildet und eingerichtet ist.

Vorzugsweise ist zur Veränderung des mindestens einen Ausschleuseelements 24 ist das mindestens eine Positionierelement 25 entsprechend betätigbar, insbesondere automatisiert und/oder selbsttätig, um die entsprechende Veränderung des jeweiligen Durchgangsspalts 26 auszubilden und einzurichten. Weiter bevorzugt ist in Abhängigkeit von der vorgegebenen Anzahl der erfassten und/oder bestimmten Werte der geförderten Fische 11 das mindestens eine Ausschleuseelement 24 positionsveränderbar ausgebildet und eingerichtet, um in Abhängigkeit von einem festlegbaren und/oder berechenbaren Einstellwert der erfassten und/oder bestimmten Werte der Fische 11 den Durchgangsspalt 26 auf dem Förderweg 19 der Ausschleuseeinrichtung 18 zu vergrößern oder zu verkleinern, insbesondere automatisiert und/oder selbsttätig. Vorzugsweise ist der Durchgangsspalt 26 geringer als die doppelte Breite der Fische ausgebildet und eingerichtet, insbesondere in Abhängigkeit von den erfassten und/oder bestimmten Werten der vorgegebenen Anzahl der Fische 11.

In einer besonders bevorzugten Ausführungsform ist die mindestens eine Erfassungseinheit 27 beispielsweise dazu ausgebildet und eingerichtet, die Breiten einer vorgegebenen Anzahl von der Ausschleuseeinrichtung 18 und mittels der Übernahmeeinheit 22 übernommenen geförderten Fischen 11 zu erfassen bzw. zu ermitteln. Die vorgegebene Anzahl ist individuell auswählbar bzw. einstellbar und orientiert sich insbesondere an einer möglichst repräsentativen Anzahl von geförderten Fischen. Nachfolgend sind beispielhaft zehn mittels einer entsprechenden Erfassungseinheit 27 erfasste bzw. ermittelte Werte der Fische 11 angegeben: 20 cm, 22 cm, 21 cm, 19 cm, 23 cm, 20 cm, 21 cm, 22 cm, 20 cm und 21 cm. Der Durchschnitt dieser Werte beträgt 20,5 cm. Ausgehend von diesem Durchschnittswert/Mittelwert und/oder den Extremwerten (19 cm, 23 cm) ist der Durchgangsspalt 26 mittels des Positionierelements 25 exemplarisch auf 30 cm einstellbar, um zu gewährleisten, dass Fische 11 mit einer maximalen Breite von 30 cm gefördert werden, jedoch nicht mindestens zwei nebeneinander auf dem Ausschleuseförderband 20 geförderte Fische 11 mit einer doppelten Breite des Durchschnittswerts bzw. der Extremwerte. Bei mindestens zwei nebeneinanderliegenden Fischen 11 ist mindestens einer dieser Fische 11 mittels des Ausschleuseelements 24 ausschleusbar, indem mindestens einer der Fische 11 durch den Vortrieb des mindestens einen Ausschleuseförderbandes 20 und bei Kontakt mit dem mindestens einen Ausschleuseelement 24 ausgeschleust wird. Sollte ergänzend oder alternativ auch das Gewicht der Fische 11 als relevant vorgesehen sein, könnte eine analoge Berechnung für das Gewicht durchgeführt werden, um den Durchgangsspalt 26 ebenfalls ausgehend von einer vorgegebenen Position entsprechend zu verändern. Diese datenbasierte Anpassung des Durchgangsspaltes 26 ist vorzugsweise automatisch oder automatisierbar einstellbar und die darauf basierenden Regeln sind besonders bevorzugt in Abhängigkeit von gewünschten oder relevanten Parametern zu spezifizieren.

Gemäß einer weiteren vorteilhaften Ausbildung der Erfindung ist das mindestens eine Ausschleuseelement 24 mittels des Positionierelements 25 um eine im Wesentlichen in der Vertikalen verlaufenden Schwenkachse 28 verschwenkbar ausgebildet und eingerichtet, derart, dass das mindestens eine Ausschleuseelement 24 in den Förderweg 19 hineinbewegbar oder aus dem Förderweg 19 herausbewegbar ist. Vorzugsweise bildet das mindestens eine Ausschleuseelement 24 ein in den Förderweg 19 ragendes freies Ende 29 aus, wobei das freie Ende 29 und eine sich entlang der Förderrichtung erstreckende Längsseite 30 der mindestens einen Ausschleuseausnehmung 21 den Durchgangsspalt 26 definieren.

In einer bevorzugten Ausführungsform umfasst die Ausschleuseeinrichtung 18 zwei im Wesentlichen parallel verlaufende, jeweils einen Förderweg 19 bildende Ausschleuseförderbänder 20 mit jeweils einem in den Förderweg 19 des jeweiligen Ausschleuseförderbandes 20 ragenden Ausschleuseelement 24, wobei zwischen den beiden Ausschleuseförderbändern 20 zumindest bereichsweise die mindestens eine Ausschleuseausnehmung 21 zum Ausschleusen der Fische 11 ausgebildet und eingerichtet ist. Die in den Fig. 1 bis Fig. 5 gezeigte Ausschleuseeinrichtung 18 weist jeweils zwei Ausschleuseförderbänder 20 mit einer dazwischen befindlichen Ausschleuseausnehmung 21 auf. Grundsätzlich ist die Funktionsweise der erfindungsgemäßen Vorrichtung auch nur mit einem Ausschleuseförderband 20 funktional, wobei dann an mindestens einer der Längsseiten des Ausschleuseförderbands 20 zumindest bereichsweise die entsprechende Ausschleuseausnehmung 21 ausgebildet und eingerichtet ist.

Vorzugsweise ist, wie in den Fig. 1 bis Fig. 5 dargestellt, bei der erfindungsgemäßen Vorrichtung 10 in Förderrichtung 16 gesehen vor der mindestens einen Ausschleuseausnehmung 21 am Eingang 31 der Ausschleuseeinrichtung 18 zwischen den beiden Ausschleuseförderbändern 20 mindestens ein Keilelement 32 angeordnet. Dieses Keilelement 32 ist bevorzugt derart ausgestaltet, dass es eine Separierung der geförderten Fische 11 zwischen den beiden Ausschleuseförderbändern 20 ermöglicht. Es kann aus einem geeigneten Material gefertigt sein, das sowohl eine hohe Festigkeit als auch eine gute Abriebfestigkeit aufweist, um den Anforderungen des Förderprozesses gerecht zu werden und eine Anhaftung von Fischen verhindert. Die Form und Anordnung des Keilelements 32 sind so gewählt, dass eine optimale Führung der Fische 11 und Aufteilung in zwei Fischströme gewährleistet ist, wodurch besonders bevorzugt eine möglichst gleichmäßige Verteilung und eine reibungslose Förderung der Fische 11 zur de Ausschleuseeinrichtung 18 gewährleistet ist. In einer weiteren bevorzugten Ausführungsform ist in Förderrichtung 16 gesehen im Endabschnitt 34 der Ausschleuseausnehmung 21, ein Aufnahmeelement 33 vorgesehen. Dieses Aufnahmeelement 33 ist derart ausgebildet und eingerichtet, dass es zumindest bereichsweise in die Ausschleuseausnehmung 21 hineinragt. Es dient dem abschnittsweisen Aufnehmen von teilweise in der Ausschleuseausnehmung 21 hängend geförderten Fischen 11. Das Aufnahmeelement 33 lässt sich so gestalten, dass es flexibel an die jeweilige Größe und Form der geförderten Fische 11 anpassbar ist, um eine tragende Aufnahme auszubilden. Vorzugsweise ist das Aufnahmeelement 33 mit einer spezifischen Oberflächenstruktur versehen, die ein Abrutschen der Fische 11 verhindert und gleichzeitig einen tragenden Berührungskontakt ermöglicht. Weiter bevorzugt ist das Aufnahmeelement 33 angetrieben oder antreibbar ausgebildet und eingerichtet. Besonders bevorzugt ist das Aufnahmeelement 33 synchron mit der Fördergeschwindigkeit des mindestens einen Ausschleuseförderbandes 20 und/oder des Förderbandes der Übernahmeeinheit 22 ausgebildet und eingerichtet. Durch die Synchronisation kann das Aufnahmeelement 33 zuverlässig auf die Lage der Fische 11 einwirken, wodurch ein reibungsloser Übergang zu den nachfolgenden Prozessschritten der Fischverarbeitungsanlage 12 ermöglicht wird und wodurch ein unerwünschtes Herabfallen von Fischen 11 in die Ausschleuseausnehmung 21, die den Durchgangsspalt 26 bereits durchlaufen haben, verhindert wird.

Die Erfindung betrifft ferner ein Verfahren zum automatischen Zuführen von Fischen 11 zu einer - in den Figuren nicht näher dargestellten - Fischverarbeitungseinrichtung. In dem erfindungsgemäßen Verfahren zur automatischen Zuführung bzw. Förderung werden zunächst die Fische 11 mittels einer Zuführeinrichtung 14 bereitgestellt, die mit einem Zentralförderband 15 ausgestattet ist. Die Zuführeinrichtung 14 ist zum im Wesentlichen längsaxialen Fördern der Fische 11 auf dem Zentralförderband 15 in einer Förderrichtung 16 vorgesehen, wobei die Fische 11 im Wesentlichen mit dem Schwanz voraus oder mit dem Kopfabschnitt voraus gefördert werden. Anschließend erfolgt das Zuführen der Fische 11 von der Zuführeinrichtung 14 zu einer Ausschleuseeinrichtung 18, die mindestens ein Ausschleuseförderband 20 umfasst. Dieses mindestens eine Ausschleuseförderband 20 ist in Förderrichtung 16 der Zuführeinrichtung 14 nachgeordnet ausgebildet und eingerichtet, um die Fische 11 von dem Zentralförderband 15 zu übernehmen. Im nächsten Schritt erfolgt das selektive Ausschleusen der Fische 11 von dem mindestens einen Ausschleuseförderband 20 durch mindestens eine Ausschleuseausnehmung 21 der Ausschleuseeinrichtung 18. Schließlich werden die von dem mindestens einen Ausschleuseförderband 20 durch die Ausschleuseeinrichtung 18 geförderten Fische 11 mittels einer Übernahmeeinheit 22 übernommen oder übergeben.

Dieses Verfahren zeichnet sich erfindungsgemäß dadurch aus, dass Fische 11 mittels der mindestens einen Ausschleuseeinrichtung 18 selektiv ausgeschleust werden. Die Ausschleuseeinrichtung 18 umfasst mindestens ein in den Förderweg 19 des mindestens einen Ausschleuseförderbandes 20 ragendes Ausschleuseelement 24. Dieses mindestens eine Ausschleuseelement 24 wird mittels eines steuer- und/oder regelbaren Positionierelementes 25 in seiner Lage relativ zum Förderweg 19 des Ausschleuseförderbandes 20 derart verändert, dass ein in seiner Breite veränderbarer Durchgangsspalt 26 im Förderweg 19 ausgebildet wird. Die Förderung der auf dem Ausschleuseförderband 20 geförderten Fische 11 wird dabei durch eine maximale Breite des Durchgangsspaltes 26 begrenzt.

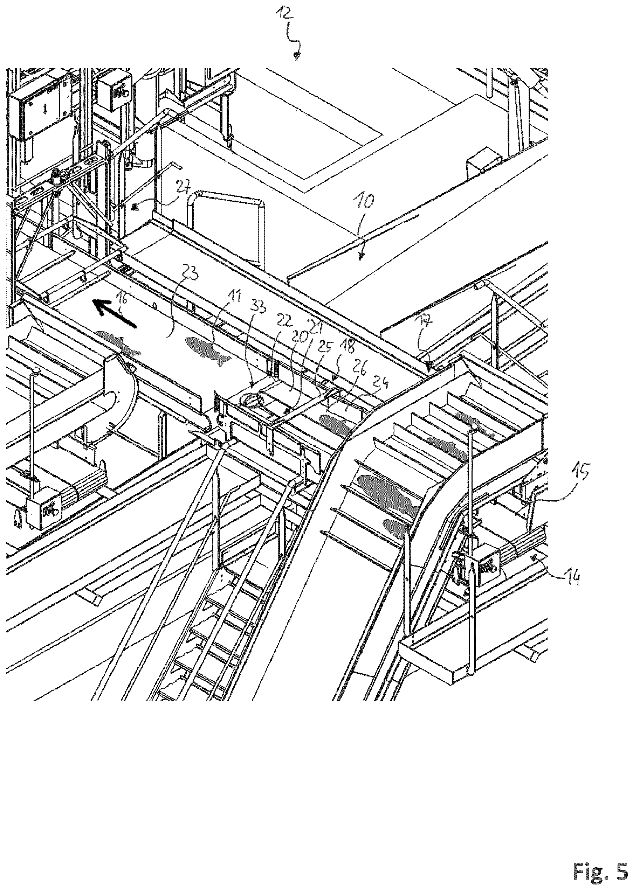

Die Fig. 1 und Fig. 5 zeigen den Vorgang der automatischen Zuführung/Förderung der Fische 11 anhand der dort dargestellten Vorrichtung 10. In der dargestellten Fischverarbeitungsanlage 12 vorzugsweise mehrere entsprechende Vorrichtungen 10, Zuführeinrichtungen 14 bzw. Ausschleuseeinrichtungen 18 nebeneinander abgebildet, wobei mindestens eine Vorrichtung 10 ausreichend ist, um das erfindungsgemäße Verfahren auszuführen.

Vorzugsweise wird das mindestens eine Ausschleuseelement 24 mittels des Positionierelements 25 automatisch und/oder selektiv in seiner Lage verändert wird. In einer bevorzugten Ausführungsform erfolgt das Verfahren erfindungsgemäß so, dass die von der Ausschleuseeinrichtung 18 an die Übernahmeeinheit 22 geförderten Fische 11 mittels mindestens einer der Ausschleuseeinrichtung 18 nachgeordneten Erfassungseinheit 27 erfasst werden. Die Erfassungseinheit 27 ist insbesondere zur Erfassung und/oder Bestimmung der Breite und/oder des Gewichts der geförderten Fische 11 ausgebildet und eingerichtet. Durch diese Erfassung ist eine gezielte Erfassung und Analyse der geförderten Fische 11 möglich, was zu einer Optimierung des gesamten Verarbeitungsprozesses beiträgt und eine gezielte Anpassung des Förderprozesses erlaubt. Weiter bevorzugt wird das Verfahren gemäß der Erfindung derart durchgeführt, dass das mindestens eine Ausschleuseelement 24 in Abhängigkeit von den mittels der mindestens einen Erfassungseinheit 27 erfassten Fischen 11 geregelt und/oder gesteuert wird. Insbesondere erfolgt die Regelung und Steuerung in Abhängigkeit von einer vorgegebenen Anzahl von erfassten und/oder bestimmten Werten der geförderten Fische 11. Diese Anpassung ermöglicht eine gezielte und effiziente Steuerung des Ausschleuseprozesses, indem der Durchgangsspalt 26 in Abhängigkeit von erfassten oder bestimmten Werten der Fische 11 im Bedarfsfall verändert wird.

In einer weiteren bevorzugten Ausführungsform der Erfindung ist das Ausschleuseelement 24 in Abhängigkeit von der vorgegebenen Anzahl der erfassten und/oder bestimmten Werte der geförderten Fische 11 positionsveränderbar. Dies ermöglicht es, den Durchgangsspalt 26 auf dem Förderweg 19 der Ausschleuseeinrichtung 18 in Abhängigkeit von einem festlegbaren und/oder berechenbaren Einstellwert der erfassten und/oder bestimmten Werte der Fische 11 zu vergrößern oder zu verkleinern, insbesondere automatisiert und/oder selbsttätig. Diese Funktionalität trägt zur Effizienz und Flexibilität des Ausschleuseprozesses bei und ermöglicht eine optimale Anpassung an die jeweiligen Anforderungen der Fischverarbeitung und/oder der entsprechenden Fische 11 in den zu fördernden Chargen beim Ausgangspunkt.

Vorzugsweise wird der Durchgangsspalt 26 in Abhängigkeit insbesondere von den erfassten und/oder bestimmten Werten der vorgegebenen Anzahl der Fische 11 geringer als die doppelte Breite der Fische 11 eingestellt. Weiter bevorzugt wird das mindestens eine Ausschleuseelement 24 mittels des Positionierelements 25 um eine im Wesentlichen vertikal verlaufende Schwenkachse 28 derart verschwenkt, dass das mindestens eine Ausschleuseelement zur Veränderung des Durchgangsspalts in den Förderweg 19 hinein oder aus dem Förderweg 19 heraus bewegt wird.

Besonders bevorzugt wird das Verfahren mit einer Vorrichtung 10 nach einem oder mehreren der Ansprüche 1 bis 10 ausgeführt.

## Patentansprüche

1. Vorrichtung (10), ausgebildet und eingerichtet zum automatischen Zuführen von Fischen (11) zu einer Fischverarbeitungseinrichtung, umfassend eine Zuführeinrichtung (14) mit einem Zentralförderband (15), wobei die Zuführeinrichtung (14) zum im Wesentlichen längsaxialen Fördern der Fische (11) auf dem Zentralförderband (15) in einer Förderrichtung (16) im Wesentlichen mit dem Schwanz voraus oder mit dem Kopfabschnitt voraus ausgebildet und eingerichtet ist,
eine Ausschleuseeinrichtung (18) mit mindestens einem einen Förderweg (19) bildenden Ausschleuseförderband (20), wobei das mindestens eine Ausschleuseförderband (20) in Förderrichtung (16) der Zuführeinrichtung (14) nachgeordnet ausgebildet und zum Zuführen der Fische (11) von dem Zentralförderband (15) eingerichtet ist, und mindestens einer Ausschleuseausnehmung (21), wobei die mindestens eine Ausschleuseausnehmung (21) zum selektiven Ausschleusen von Fischen (11) von dem mindestens einen Ausschleuseförderband (20) durch die Ausschleuseausnehmung (21) vorgesehen ist,
eine der Ausschleuseeinrichtung (18) nachgeordnete Übernahmeeinheit (22), wobei die Übernahmeeinheit (22) zur Übernahme der mittels der Ausschleuseeinrichtung (18) geförderten Fische (11) ausgebildet und eingerichtet ist,
**dadurch gekennzeichnet, dass**
die Ausschleuseeinrichtung (18) mindestens ein in den Förderweg (19) des mindestens einen Ausschleuseförderbands (20) ragendes Ausschleuseelement (24) umfasst, wobei das mindestens eine Ausschleuseelement (24) mindestens ein steuer- und/oder regelbares Positionierelement (25) umfasst, um das mindestens eine Ausschleuseelement (24) in seiner Lage relativ zum Förderweg (19) des Ausschleuseförderbands (20) derart veränderbar auszubilden und einzurichten, dass ein in seiner Breite veränderbarer Durchgangsspalt (26) des Förderwegs (19) zum Fördern von auf dem Ausschleuseförderband (20) angeordneten Fischen (11) mit einer maximalen Breite des Durchgangsspalts (26) erzeugbar ist.

2. Vorrichtung (10) nach Anspruch 1, **dadurch gekennzeichnet, dass** das mindestens eine Ausschleuseelement (24) zur automatischen und/oder selektiven Veränderung des Durchgangsspalts (26) ausgebildet und eingerichtet ist, wobei das Positionierelement (25) die Lageveränderung des mindestens eine Ausschleuseelements (24) realisiert.

3. Vorrichtung (10) nach Anspruch 1 oder 2, weiter umfassend mindestens eine Erfassungseinheit (27), wobei die mindestens eine Erfassungseinheit (27) zur Erfassung und/oder Bestimmung von geförderten Fischen (11), insbesondere der Größe, der Breite und/oder des Gewichts, ausgebildet und eingerichtet ist.

4. Vorrichtung (10) nach Anspruch 3, **dadurch gekennzeichnet, dass** die mindestens eine Erfassungseinheit (27) in Förderrichtung (16) vor der Ausschleuseeinrichtung (18) und/oder hinter der Ausschleuseeinrichtung (18) angeordnet ist, wobei die mindestens eine Erfassungseinheit (27) insbesondere zur Erfassung und/oder Bestimmung der von der Ausschleuseeinrichtung (18) an die Übernahmeeinheit (22) geförderten Fische (11) ausgebildet und eingerichtet ist.

5. Vorrichtung (10) nach Anspruch 3 oder 4, **dadurch gekennzeichnet, dass** das mindestens eine Ausschleuseelement (24) in Abhängigkeit von mittels der mindestens einen Erfassungseinheit (27) erfassten Fischen (11), insbesondere in Abhängigkeit von einer vorgegebenen Anzahl von erfassten und/oder bestimmten Werten von geförderten Fischen (11), regel- und/oder steuerbar ausgebildet und eingerichtet ist.

6. Vorrichtung (10) nach Anspruch 5, **dadurch gekennzeichnet, dass** in Abhängigkeit von der vorgegebenen Anzahl der erfassten und/oder bestimmten Werte der geförderten Fische (11) das mindestens eine Ausschleuseelement (24) positionsveränderbar ausgebildet und eingerichtet ist, um in Abhängigkeit von einem festlegbaren und/oder berechenbaren Einstellwert der erfassten und/oder bestimmten Werte der Fische (11) den Durchgangsspalt (26) auf dem Förderweg (19) der Ausschleuseeinrichtung (18) zu vergrößern oder zu verkleinern, insbesondere automatisiert und/oder selbsttätig.

7. Vorrichtung (10) nach einem oder mehreren der Ansprüche 1 bis 6, **dadurch gekennzeichnet, dass** der Durchgangsspalt (26) geringer als die doppelte Breite der Fische (11) ausgebildet und eingerichtet ist, insbesondere in Abhängigkeit von den erfassten und/oder bestimmten Werten der vorgegebenen Anzahl der Fische (11).

8. Vorrichtung (10) nach einem oder mehreren der Ansprüche 1 bis 7, **dadurch gekennzeichnet, dass** das mindestens eine Ausschleuseelement (24) mittels des Positionierelements (25) um eine im Wesentlichen in der Vertikalen verlaufenden Schwenkachse (28) verschwenkbar ausgebildet und eingerichtet ist, derart, dass das mindestens eine Ausschleuseelement (24) in den Förderweg (19) hineinbewegbar oder aus dem Förderweg (19) herausbewegbar ist.

9. Vorrichtung (10) nach einem oder mehreren der Ansprüche 1 bis 8, **dadurch gekennzeichnet, dass** das mindestens eine Ausschleuseelement (24) ein in den Förderweg (19) ragendes freies Ende (29) ausbildet und einrichtet, wobei das freie Ende (29) und eine sich entlang der Förderrichtung (16) erstreckende Längsseite (30) der mindestens einen Ausschleuseausnehmung (21) den Durchgangsspalt (26) definieren.

10. Vorrichtung (10) nach einem oder mehreren der Ansprüche 1 bis 9, **dadurch gekennzeichnet, dass** die Ausschleuseeinrichtung (18) zwei im Wesentlichen parallel verlaufende, jeweils einen Förderweg (19) bildende Ausschleuseförderbänder (20) mit jeweils einem in den Förderweg (19) des jeweiligen Ausschleuseförderbandes (20) ragenden Ausschleuseelement (24) umfasst, wobei zwischen den beiden Ausschleuseförderbändern (20) zumindest bereichsweise die mindestens eine Ausschleuseausnehmung (21) zum Ausschleusen der Fische (11) ausgebildet und eingerichtet ist.

11. Vorrichtung (10) nach Anspruch 10, **dadurch gekennzeichnet, dass** in Förderrichtung (16) gesehen vor der mindestens einen Ausschleuseausnehmung (21) am Eingang (31) der Ausschleuseeinrichtung (18) zwischen den beiden Ausschleuseförderbändern (20) mindestens ein Keilelement (32) zum Separieren der geförderten Fische (11) zwischen den beiden Ausschleuseförderbändern (20) angeordnet ist und/oder dass in dem in Förderrichtung (16) gesehenen Endabschnitt (34) der Ausschleuseausnehmung (21) ein insbesondere zumindest bereichsweise in die Ausschleuseausnehmung (21) hineinragendes Aufnahmeelement (33) angeordnet ist, wobei das Aufnahmeelement (33) zum abschnittsweisen Aufnehmen von teilweise in der Ausschleuseausnehmung (21) hängenden Fischen (11) ausgebildet und eingerichtet ist.

12. Verfahren zum automatischen Zuführen von Fischen (11) zu einer Fischverarbeitungseinrichtung, umfassend die Schritte
- Bereitstellen von Fischen (11) mittels einer Zuführeinrichtung (14) mit einem Zentralförderband (15), wobei die Zuführeinrichtung (14) zum im Wesentlichen längsaxialen Fördern der Fische (11) auf dem Zentralförderband (15) in einer Förderrichtung (16) im Wesentlichen mit dem Schwanz voraus oder mit dem Kopfabschnitt voraus vorgesehen ist,
- Zuführen der Fische (11) von der Zuführeinrichtung (14) zu einer Ausschleuseeinrichtung (18) mit mindestens einem einen Förderweg (19) bildenden Ausschleuseförderband (20), wobei das mindestens eine Ausschleuseförderband (20) in Förderrichtung (16) der Zuführeinrichtung (14) nachgeordnet ausgebildet und zur Übernahme der Fische (11) von dem Zentralförderband (15) eingerichtet ist,
- selektives Ausschleusen von Fischen (11) von dem mindestens einen Ausschleuseförderband (20) durch mindestens eine Ausschleuseausnehmung (21) der Ausschleuseeinrichtung (18),
- Übernehmen oder Übergeben der von dem mindestens einen Ausschleuseförderband (20) durch die Ausschleuseeinrichtung (18) geförderten Fische (11) mittels einer Übernahmeeinheit (22),
**dadurch gekennzeichnet, dass**
Fische (11) mittels der mindestens einen Ausschleuseeinrichtung (18) selektiv ausgeschleust werden, wobei die Ausschleuseeinrichtung (18) mindestens ein in den Förderweg (19) des mindestens einen Ausschleuseförderbandes (20) ragendes Ausschleuseelement (24) umfasst, wobei das mindestens eine Ausschleuseelement (24) mittels eines steuer- und/oder regelbaren Positionierelementes (25) in seiner Lage relativ zum Förderweg (19) des Ausschleuseförderbandes (20) derart verändert wird, dass ein in seiner Breite veränderbarer Durchgangsspalt (26) in dem Förderweg (19) ausgebildet wird, wobei die Förderung der auf dem Ausschleuseförderband (20) geförderten Fische (11) durch eine maximale Breite des Durchgangsspaltes (26) begrenzt wird.

13. Verfahren nach Anspruch 12, **dadurch gekennzeichnet, dass** das mindestens eine Ausschleuseelement (24) mittels des Positionierelements (25) automatisch und/oder selektiv in seiner Lage verändert wird.

14. Verfahren nach Anspruch 12 oder 13, **gekennzeichnet durch** Erfassen und/oder Bestimmen von geförderten Fischen (11), insbesondere der Größe, der Breite und/oder des Gewichts, mittels mindestens einer Erfassungseinheit (27).

15. Verfahren nach Anspruch 14, **dadurch gekennzeichnet, dass** die Fische (11) mittels der mindestens einen Erfassungseinheit (27) in Förderrichtung (16) vor und/oder hinter der Ausschleuseeinrichtung (18) erfasst und/oder bestimmt werden, insbesondere dass die von der Ausschleuseeinrichtung (18) an die Übernahmeeinheit (22) geförderten Fische (11) mittels der mindestens einen der Ausschleuseeinrichtung (18) nachgeordneten Erfassungseinheit (27) erfasst und/oder bestimmt werden.

16. Verfahren nach Anspruch 14 oder 15, **dadurch gekennzeichnet, dass** das mindestens eine Ausschleuseelement (24) in Abhängigkeit von mittels der mindestens einen Erfassungseinheit (27) erfassten Fischen (11), insbesondere in Abhängigkeit von einer vorgegebenen Anzahl von erfassten und/oder bestimmten Werten von geförderten Fischen (11), geregelt und/oder gesteuert wird.

17. Verfahren nach Anspruch 16, **dadurch gekennzeichnet, dass** in Abhängigkeit von der vorgegebenen Anzahl der erfassten und/oder bestimmten Werte der geförderten Fische (11) das Ausschleuseelement (24) positionsveränderbar ist, um in Abhängigkeit von einem festlegbaren und/oder berechenbaren Einstellwert der erfassten und/oder bestimmten Werte der Fische (11) den Durchgangsspalt (26) auf dem Förderweg (19) der Ausschleuseeinrichtung (18) zu vergrößern oder zu verkleinern, insbesondere automatisiert und/oder selbsttätig.

18. Verfahren nach einem oder mehreren der Ansprüche 13 bis 17, **dadurch gekennzeichnet, dass** der Durchgangsspalt (26) in Abhängigkeit insbesondere von den erfassten und/oder bestimmten Werten der vorgegebenen Anzahl der Fische (11) geringer als die doppelte Breite der Fische (11) eingestellt wird.

19. Verfahren nach einem oder mehreren der Ansprüche 13 bis 18, **dadurch gekennzeichnet, dass** das mindestens eine Ausschleuseelement (24) mittels des Positionierelements (25) um eine im Wesentlichen vertikal verlaufende Schwenkachse (28) derart verschwenkt wird, dass das mindestens eine Ausschleuseelement (24) zur Veränderung des Durchgangsspalts (26) in den Förderweg (19) hinein oder aus dem Förderweg (19) heraus bewegt wird.
